# EUROPÄISCHE PATENTSCHRIFT

(11) **EP 0 540 928 B1**
(45) Veröffentlichungstag und Bekanntmachung des Hinweises auf die Patenterteilung: **18.02.1998**
(21) Anmeldenummer: 92117829.9
(22) Anmeldetag: 19.10.1992
(51) Int. Cl.: H04M 1/274

(54) **Verfahren zur Wahlwiederholung bei Kommunikations-Endgeräten**
Method for automatic redialling in communication terminals
Procédé de recomposition automatique d'un numéro pour des terminaux de communication

(30) Priorität: 26.10.1991 DE 4135384
(43) Veröffentlichungstag der Anmeldung: 12.05.1993
(73) Patentinhaber: ROBERT BOSCH GMBH, 70442 Stuttgart (DE)
(72) Erfinder: Zibis, Ulf, Dipl.-Ing., W-8000 München 80 (DE)

(56) Entgegenhaltungen:
- DE-A- 3 410 633
- US-A- 4 736 410
- US-A- 4 930 155
- US-T- 966 005

## Beschreibung

Die Erfindung betrifft ein Verfahren zur Wahlwiederholung bei Kommunikations-Endgeräten nach dem Oberbegriff des Patentanspruchs 1.

Aus der DE-A-2 734 139 ist ein Komfortfernsprecher bekannt, bei dem auch das Merkmal Wahlwiederholung angewendet wird. Es sind zwei Wahlwiederholspeicher vorgesehen, für deren Ansteuerung ein Unterscheidungskriterium notwendig ist. Wenn einer der Wahlwiederholspeicher belegt ist, wird durch das Unterscheidungskriterium der jeweils freie Wahlwiederholungsspeicher als Wahlwiederholer bereitgestellt. Für den Benutzer ist es dann wichtig zu wissen, welche zu wiederholende Rufnummer in welchem Wahlwiederholungsspeicher gespeichert ist. Zur gezielten Auswahl einer von zwei gespeicherten Rufnummern sind in einer zwölfteiligen Tastatur zwei Tasten für die Wahlwiederholung vorgesehen.

Bei einer derartigen Anordnung von Wahlwiederholspeichern mit einer festen Zuordnung zu zwei Symboltasten können nur zwei Wahlwiederholspeicher eingesetzt werden. Es ist zwar im Patentanspruch 3 der vorgenannten Offenlegungsschrift erwähnt, daß "die Schaltungsanordnung auf zwei Merker erweiterbar ist", jedoch ergibt sich dann mit den beiden für die Wahlwiederholung vorgesehenen Tasten eine kompliziertere Bedienungsprozedur. Außerdem ist nicht im einzelnen angegeben, wie der weitere Merker in dem beschriebenen Komfortfernsprecher angeordnet ist.

Aus der US-A-4 930 155 ist ein Fernsprecher bekannt, bei dem eine Anzahl von für die Wahlwiederholung bereitzustellenden Rufnummern angesteuert werden kann.

Die Aufgabe der Erfindung besteht darin, ein Verfahren zur Wahlwiederholung bei Kommunikations-Endgeräten vorzustellen, wobei mit einer einfachen Bedienungsprozedur und der Benutzung nur einer einzigen Taste eine größere Anzahl von für die Wahlwiederholung bereitzustellenden Rufnummern von anzurufenden Zielen angesteuert werden kann. Dabei soll die Art der Bedienungsprozedur gleich bleiben, unabhängig davon, wieviele Wahlwiederhol-Speicherplätze zur Verfügung stehen.

Für die Lösung dieser Aufgabe ist eine Merkmalskombination vorgesehen, wie sie im Patentanspruch 1 angegeben ist.

Damit wird in vorteilhafter Weise erreicht, daß einem Benutzer mehrere Rufnummern für die Wahlwiederholung zur Verfügung stehen, die er jederzeit abrufen kann. Für die Bedienung ist nur eine einzige Taste erforderlich, wobei die jeweils zuletzt gewählte Rufnummer zuerst ausgegeben wird, wenn nicht eine andere Rufnummer gewünscht wird. Beim Überschreiten der vorgesehenen Speicherkapazität wird jeweils die am weitesten zurückliegende Rufnummer aus dem Speicher entfernt, d.h. überschrieben, so daß immer die zuletzt gewählten Ziele für eine Wahlwiederholung zur Verfügung stehen.

Weiterbildungen der Erfindung ergeben sich aus den Unteransprüchen. Besonders vorteilhaft ist es dabei, wenn die zur Wahlwiederholung bereitzustellende Rufnummer jeweils in einer Anzeigeeinrichtung erscheint. Die in den einzelnen Zeilen des Wahlwiederholungsspeichers stehenden Rufnummern können außerdem einzeln gezielt in einen Kurzwahlspeicher übernommen werden. Auch eine Rufnummer eines Anrufers, die sich in einer Anrufliste befindet, kann in den Wahlwiederholungsspeicher eingespeichert werden.

Ein Ausführungsbeipiel der Erfindung wird nachfolgend anhand von Zeichnungen näher erläutert.

Es zeigt
- Fig 1: eine Funktionsübersicht
- Fig 2: ein Blockschaltbild.

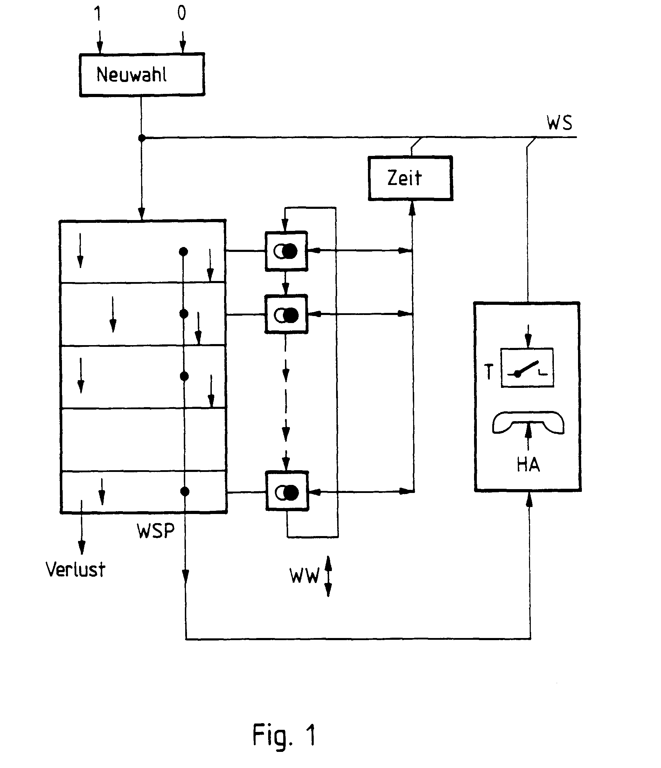

Der in Fig 1 dargestellte Wahlwiederholungsspeicher WSP kann auf mehreren Speicherplätzen (Zeilen) jeweils eine Rufnummer aufnehmen und arbeitet nach dem LIFO-Prinzip. Eine jeweils zuletzt eingespeicherte Rufnummer wird also zuerst ausgegeben. Dies ist durch Pfeile angedeutet, wonach eine zuletzt eingegebene Rufnummer in der oberen Zeile des Speichers zu finden ist. Die Eingabe einer Rufnummer erfolgt automatisch bei einer Neuwahl. Wenn die Grenze der Speicherkapazität erreicht ist, geht die am weitesten zurückliegende Rufnummer verloren.

Mit dem Betätigen der Wahlwiederholtaste WW, die mit einem genormten Symbol gekennzeichnet ist, kann jeder Speicherplatz gezielt angesteuert werden. Bei einmaliger Betätigung wird die zuletzt gewählte Rufnummer ausgelesen. Mit jeder erneuten Betätigung der Wahlwiederholtaste WW wird auf eine jeweils früher gewählte Rufnummer umgeschaltet.

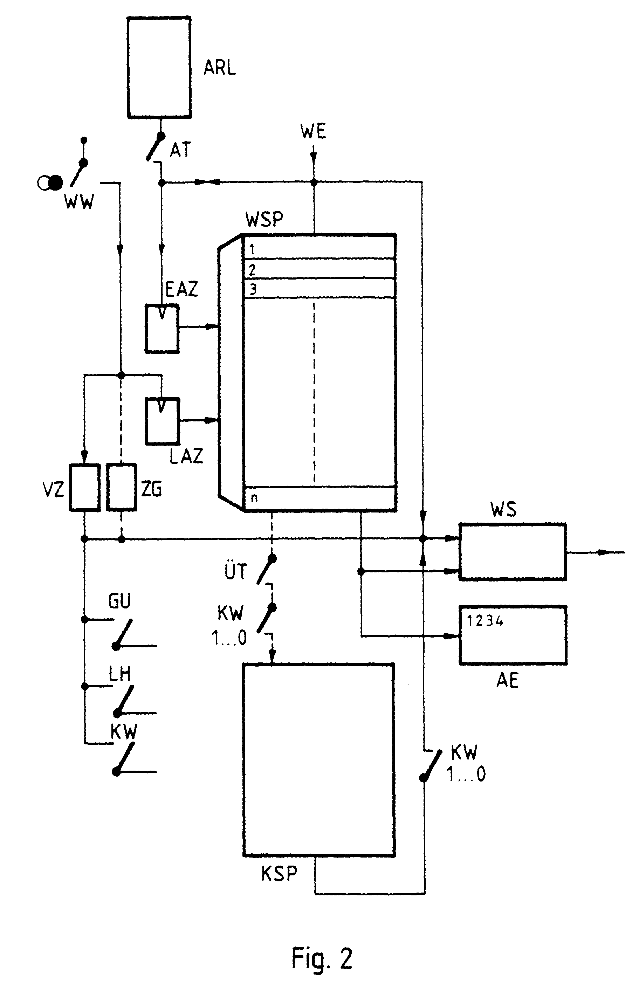

Der Start der Wahlaussendung WS beginnt, wenn nach dem Loslassen der Wahlwiederholtaste WW eine vorgegebene Zeit verstrichen ist oder die Betätigungsdauer lange genug war. Einzelheiten hierzu werden anhand der Fig 2 erläutert. Die Bedienungsprozedur kann auch so gestaltet sein, daß die Wahlwiederholtaste WW lediglich zur Auswahl einer Rufnummer dient und der Start der Wahlaussendung WS durch Abnehmen des Handapparates HA oder das Betätigen einer anderen Taste T erfolgt.

In der Fig 2 ist dargestellt, wie beim Wählen einer Rufnummer über die Wahleingangsleitung WE die über einen Wahlsender WS ausgesendete Rufnummer in eine Zeile, z. B. 1, des Wahlwiederholungsspeichers WSP eingespeichert wird.

Eine der Zeilen 1 bis n wird dabei so angesteuert, daß jede folgende Rufnummer in die jeweils nächste Zeile gelangt. Wenn eine neue Rufnummer ausgesendet wird, und im Wahlwiederholungsspeicher WSP keine Zeile mehr frei ist, so wird die am weitesten zurückliegende Rufnummer, z. B. die in der Zeile 1 stehende, durch die neue Rufnummer überschrieben. Bei der nächsten neuen Rufnummer wird die dann folgende Zeile, im Beispiel 2, überschrieben. Auf diese Weise werden immer die n letzten gewählten Rufnummern im Wahlwiederholungsspelcher WSP festgehalten. Dazu sind zwei Adreßzähler, einer für das Einspeichern EAZ und einer für das Lesen LAZ, vorgesehen. Beim Wählen einer neuen Rufnummer wird der Einspeicher-Adreßzähler EAZ um 1 erhöht, so daß er immer auf diese zuletzt eingespeicherte Rufnummer zeigt.

Beim jeweils erstmaligen Betätigen der mit einem genormten Symbol bezeichneten Wahlwiederholungstaste WW wird der Lese-Adreßzähler LAZ auf diejenige Zeile geschaltet, wo auch der Einspeicher-Adreßzähler EAZ hinzeigt, also dorthin, wo zuletzt eine neue Rufnummer eingespeichert wurde. Bei einer erneuten Betätigung der Wahlwiederholungstaste WW wird der Lese-Adreßzähler LAZ um einen Schritt rückwärts gezählt, so daß die vorletzte Rufnummer ausgespeichert werden kann. Jedes erneute Betätigen der Wahlwiederholungstaste WW bewirkt, daß der Lese-Adreßzähler LAZ auf eine Zeile 1 bis n geschaltet wird, welche eine jeweils früher gewählte Rufnummer beinhaltet. Die jeweils bereitgestellte Rufnummer wird parallel dazu in einer Anzeigeeinrichtung AE, sofern vorhanden, sichtbar.

Wenn nach der erstmaligen Betätigung der Wahlwiederholungstaste WW eine vorbestimmte Zeit verstrichen ist, so spricht eine Verzögerungseinrichtung VZ an, und der Wahlsender WS wird angesteuert. Dabei wird die zuletzt gewählte Rufnummer ausgelesen und ausgesendet.
Für den Benutzer besteht also kein Unterschied gegenüber einem Endgerät mit nur einem einzigen Wahlwiederholungsspeicherplatz.

Der Benutzer eines Kommunikations-Endgerätes kann durch einmaliges oder mehrmaliges Betätigen der Wahlwiederholungstaste WW erreichen, daß eine beliebige im Wahlwiederholungsspeicher WSP befindliche Rufnummer ausgesendet werden kann. Dabei ist jeweils eine Kontrolle in einer vorhandenen Anzeigeeinrichtung AE möglich. Um dem Benutzer genügend Zeit für eine Kontrolle zu geben, kann die Ablaufzeit der Verzögerungseinrichtung VZ auf einen annehmbaren Wert eingestellt werden. Damit sich keine großen Unterschiede gegenüber der Bedienung bei nur einem einzigen Wahlwiederholungsspeicher ergeben, kann diese Ablaufzeit der Verzögerungseinrichtung VZ bei einmaligem Betätigen der Wahlwiederholungstaste WW auf eine kürzere Zeit eingestellt werden.

Die für eine Wahlwiederholung vorgesehene Bedienungsprozedur kann auch so abgewandelt sein, daß nach erfolgter Auswahl der zu wiederholenden Rufnummer durch zunächst kurzes Betätigen der Wahlwiederholungstaste WW diese zum Starten der Wahlaussendung erneut länger betätigt wird. Hierzu ist ein Zeitglied ZG vorgesehen, welches nach seinem Ablauf den Wahlsender WS startet.

Schließlich ist es auch denkbar, daß das Weiterschalten des Lese-Adreßzählers LAZ erst dann erfolgt, wenn die Wahlwiederholungstaste WW nach kurzer Betätigung, also kürzer als die Ablaufzeit des Zeitgliedes ZG, losgelassen wird. Ein längeres Betätigen bewirkt dann das Aussenden der angezeigten Rufnummer, so daß ein erneutes Betätigen der Wahlwiederholungstaste WW dann nicht erforderlich ist.

Eine Vereinfachung der Bedienungsprozedur ergibt sich, wenn mit der Wahlwiederholungstaste WW lediglich die Auswahl der zu wiederholenden Rufnummer vorgenommen wird. Zum Starten der Wahlaussendung muß dann der Handapparat abgenommen werden, so daß ein dabei betätigter Kontakt GU den Wahlsender WS starten kann. Anstelle eines Kontaktes GU kann auch eine Lauthörtaste LH oder eine Kurzwahltaste KW gedrückt werden. Dabei kann das Zeitglied ZG entfallen.

Die im Wahlwiederholungsspeicher WSP befindlichen Rufnummern lassen sich durch eine einfache Bedienungsprozedur in einem Kurzwahlspeicher KSP übernehmen, wenn eine Übernahmetaste ÜT vorgesehen ist. Bei Betätigung dieser Übernahmetaste ÜT wird diejenige Rufnummer in den Kurzwahlspeicher KSP übernommen, welche zuvor mit der Wahlwiederholtaste WW ausgewählt worden war. Es wird also jeweils diejenige Rufnummer in den Kurzwahlspeicher KSP übertragen, die zum Aussenden einer Rufnummer bereitgestellt wird und dabei gleichzeitig in der Anzeigeeinrichtung erscheint. Dabei muß eine der Kurzwahltasten K1 ... K0 betätigt werden, um dieser Rufnummer einen Platz im Kurzwahlspeicher zuzuweisen.

Wenn das Kommunikations-Endgerät über eine Anruferliste ARL verfügt, womit die Rufnummern von zwischenzeitlichen Anrufern festgehalten und angezeigt werden, so können diese Rufnummern in den Wahlwiederholungsspeicher WSP übernommen werden. Dies kann gezielt durch Tastendruck 1 (z.B. Taste AT) oder automatisch bei erstmaligem Anruf einer Rufnummer aus der Anruferliste erfolgen. Danach kann eine Rückrufverbindung im Zuge einer Wahlwiederholung wie beschrieben auf bequeme Weise aufgebaut werden, ohne daß eine neue komplette Auswahl erforderlich ist. Auch die Rufnummern zustandegekommener ankommender Verbindungen, welche nicht in der Anruferliste erscheinen, werden in den Wahlwiederholungsspeicher WSP übernommen.

Selbstverständlich ist das Verfahren auch anwendbar, wenn keine Anzeigeeinrichtung AE vorhanden ist, wobei sich der Benutzer natürlich merken muß, welche Rufnummern sich gerade im Wahlwiederholungsspeicher befinden. Es ist natürlich zweckmäßiger, den Inhalt des Wahlwiederholungsspeichers WSP mit Hilfe einer Anzeigeeinrichtung AE kontrollieren zu können. Wenn es versehentlich zum Ausspeichern einer in der Anzeigeeinrichtung AE sichtbaren Rufnummer kommt, so kann die Wahlaussendung rechtzeitig unterbrochen werden, bevor es zu einer Verbindung kommt.

## Patentansprüche

1. Verfahren zur Wahlwiederholung bei Kommunikations-Endgeräten mit mehr als einem Speicherplatz für Wahlwiederholung, wobei durch das Betätigen einer Wahlwiederholtaste eine vorher gewählte Rufnummer neu ausgesendet wird., **dadurch gekennzeichnet**,
daß ein Wahlwiederholungsspeicher (WSP) vorgesehen ist, der mehrere Rufnummern nacheinander aufnehmen kann, daß beim Überschreiten der Speicherkapazität des Wahlwiederholungsspeichers (WSP) die zuerst eingespeicherte Rufnummer überschrieben wird,
daß durch mehrmaliges Betätigen der einzigen Wahlwiederholungstaste (WW) jede im Wahlwiederholungsspeicher (WSP) befindliche Rufnummer so gezielt abrufbar ist, daß die jeweils zuletzt gewählte Rufnummer zuerst bereitgestellt wird,
und daß die Aussendung der zu wiederholenden Rufnummer erst dann erfolgt, wenn nach der letzten Betätigung der einzigen Wahlwiederholungstaste (WW) eine vorgegebene Zeit verstrichen ist.

2. Verfahren nach Anspruch 1,
**dadurch gekennzeichnet,**
daß die jeweils zur Aussendung bereitgestellte Rufnummer in einer Anzeigeeinrichtung (AE) erscheint.

3. Verfahren nach Anspruch 1,
**dadurch gekennzeichnet,**
daß das Aussenden der zur Wiederholung bereitgestellten Rufnummer erst dann beginnt, wenn die in einer Verzögerungseinrichtung (VZ) eingestellte Zeit nach der letzten Betätigung der Wahlwiederholtaste (WW) verstrichen ist.

4. Verfahren nach Anspruch 3,
**dadurch gekennzeichnet,**
daß die Verzögerungszeit bei einmaligem Betätigen der Wahlwiederholungstaste (WW) kürzer ist als bei mehrmaligem Tastendruck.

5. Verfahren nach Anspruch 1,
**dadurch gekennzeichnet,**
daß das Aussenden der bereitgestellten Rufnummer durch ein nochmaliges über eine durch ein Zeitglied (ZG) vorgegebene Mindestzeit hinaus andauerndes Betätigen der Wahlwiederholungstaste (WW) gestartet wird.

6. Verfahren nach Anspruch 1,
**dadurch gekennzeichnet,**
daß das Aussenden einer bereitgestellten Rufnummer beim Abnehmen des Handapparates gestartet wird.

7. Verfahren nach Anspruch 3,
**dadurch gekennzeichnet,**
daß das Aussenden einer bereitgestellten Rufnummer beim Betätigen einer Lauthörtaste (LH) oder einer Kurzwahltaste (KW) gestartet wird.

8. Verfahren nach Anspruch 1,
**dadurch gekennzeichnet,**
daß durch Tastenbetätigung (z.B. ÜT) die mit der Wahlwiederholungstaste (WW) auswählbaren Rufnummern einzeln in einen durch Betätigen einer Kurzwahltaste (KW) bereitgestellten Kurzwahlspeicher (KSP) übernommen werden.

9. Verfahren nach Anspruch 1,
**dadurch gekennzeichnet,**
daß in einer Anruferliste (ARL) befindliche Rufnummern nacheinander in den Wahlwiederholungsspeicher (WSP) übernommen werden können, um eine Verbindung zu dem jeweiligen Anrufer aufzubauen,
daß dies durch Tastenbetätigung (z.B. AT) geschieht, wobei die gerade angezeigte Anrufernummer übernommen wird.,
und daß auch aus der Anruferliste (ARL) zur Aussendung gebrachte Rufnummern automatisch in den Wahlwiederholungsspeicher (WSP) gelangen.

10. Verfahren nach Anspruch 9,
**dadurch gekennzeichnet**,
daß die Anruferliste (ARL) und der Wahlwiederholungsspeicher (WSP) zu einer Einheit zusammengefaßt sind.

11. Verfahren nach Anspruch 9,
**dadurch gekennzeichnet,**
daß Rufnummern von zustandegekommenen ankommenden Verbindungen automatisch in den Wahlwiederholungsspeicher (WSP) übernommen werden.

## Claims

1. Method for redialling in communications terminals having more than one memory location for redialling, a previously selected call number being re-transmitted as a result of the activation of a redial key, characterized in that a redial memory (WSP) which can record a plurality of call numbers successively is provided, in that, when the memory capacity of the redial memory (WSP) is exceeded, the first call number stored is overwritten, in that, as a result of repeated activation of the single redial key (WW), each call number in the redial memory (WSP) can be called selectively in such a way that the respective last call number dialled is made ready first, and in that the transmission of the call number to be redialled does not take place until a prescribed time has passed after the last activation of the single redial key (WW).

2. Method according to Claim 1, characterized in that the call number which is respectively made ready for transmission appears in a display device (AE).

3. Method according to Claim 1, characterized in that the transmission of the call number which has been made ready for redialling does not begin until the time set in a delay device (VZ) has passed after the last activation of the redial key (WW).

4. Method according to Claim 3, characterized in that when the redial key (WW) is activated once, the delay time is shorter than when the key is pressed repeatedly.

5. Method according to Claim 1, characterized in that the transmission of the call number which is made ready is started by further activation of the redial key (WW) in excess of a minimum period prescribed by a timer element (ZG).

6. Method according to Claim 1, characterized in that the transmission of a call number which has been made ready is started when the handset is picked up.

7. Method according to Claim 3, characterized in that the transmission of a call number which has been made ready is started when a loudspeaker key (LH) or an abbreviated dialling key (KW) is activated.

8. Method according to Claim 1, characterized in that, by activating a key (for example ÜT), the call numbers which can be selected with the redial key (WW) are transferred individually into an abbreviated dialling memory (KSP) which is made ready by activating an abbreviated dialling key (KW).

9. Method according to Claim 1, characterized in that call numbers in a caller list (ARL) can be successively transferred into the redial memory (WSP) in order to set up a connection to the respective caller, in that this is effected by activating a key (for example AT), the caller number which is currently being displayed being transferred, and in that call numbers which are also extracted from the caller list (ARL) for transmission are automatically fed into the redial memory (WSP).

10. Method according to Claim 9, characterized in that the caller list (ARL) and the redial memory (WSP) are combined to form one unit.

11. Method according to Claim 9, characterized in that call numbers from incoming connections which have been established are transferred automatically into the redial memory (WSP).

## Revendications

1. Procédé de répétition d'une sélection pour des terminaux de communication comprenant plus qu'un emplacement de mémoire pour une répétition de la sélection, selon lequel, par l'actionnement d'une touche de répétition de la sélection, on émet de nouveau un numéro d'appel sélectionné précédemment,
caractérisé par
• une mémoire de répétition de sélection (WSP) qui peut recevoir successivement plusieurs numéros d'appel, et
• en cas de dépassement de la capacité de la mémoire de répétition de sélection (WSP), le numéro est inscrit sur le numéro d'appel mémorisé en premier lieu,
• par un actionnement répété de l'unique touche de répétition de sélection (WW) on peut appeler de manière dirigée tout numéro d'appel contenu dans la mémoire de répétition de sélection (WSP), le dernier numéro d'appel choisi étant fourni en premier lieu, et
• l'émission du numéro d'appel à répéter se fait seulement si après le dernier actionnement de l'unique touche de répétition de sélection (WW) il s'est passé un temps prédéterminé.

2. Procédé selon la revendication 1,
caractérisé en ce que
le numéro d'appel, chaque fois fourni pour l'émission, apparaît sur un dispositif d'affichage (AE).

3. Procédé selon la revendication 1,
caractérisé en ce que
l'émission du numéro d'appel préparé pour la répétition ne commence qu'après un temps réglé par un dispositif de temporisation (VZ) à la suite du dernier actionnement de la touche de répétition de sélection (WW).

4. Procédé selon la revendication 3,
caractérisé en ce que
le temps de temporisation est plus court pour un actionnement unique de la touche de répétition de sélection (WW) que pour un actionnement multiple de cette touche.

5. Procédé selon la revendication 1,
caractérisé en ce que
l'émission du numéro d'appel fourni est démarrée par un actionnement de la touche de répétition de sélection (WW), renouvelé, dont la durée est supérieure à celle d'un temps minimum, prédéterminé par un organe de temporisation (ZG).

6. Procédé selon la revendication 1,
caractérisé en ce que
l'émission d'un numéro d'appel préparé est démarrée par le décrochage du combiné.

7. Procédé selon la revendication 3,
caractérisé en ce que
l'émission d'un numéro d'appel préparé est démarrée par l'actionnement d'une touche de haut-parleur (LH) ou d'une touche de sélection de numéro abrégé (KW).

8. Procédé selon la revendication 1,
caractérisé en ce que
par l'actionnement d'une touche (par exemple la touche ÜT), les numéros d'appel, qui peuvent être sélectionnés par la touche de répétition de sélection (WW), sont repris séparément par une mémoire de numéros abrégés préparés par l'actionnement d'une touche de sélection de numéros abrégés (KW).

9. Procédé selon la revendication 1,
caractérisé en ce que
• les numéros d'appel qui se trouvent dans une liste de numéros d'appel (ARL) peuvent être repris successivement dans la mémoire de répétition de sélection (WSP) pour établir une liaison avec l'appelant respectif,
• par l'actionnement d'une touche (par exemple la touche AT) et précisément le numéro d'appel affiché est repris, et
• également à partir de la liste des appelants (ARL), des numéros d'appel mis en émission arrivent automatiquement dans la mémoire de répétition de sélection (WSP).

10. Procédé selon la revendication 9,
caractérisé en ce que
la liste des numéros d'appel (ARL) et la mémoire de répétition de sélection (WSP) sont réunies en un ensemble.

11. Procédé selon la revendication 9,
caractérisé en ce que
les numéros d'appel des liaisons d'entrée qui s'établissent sont repris automatiquement dans la mémoire de répétition de sélection (WSP).
